(19) Europäisches Patentamt
European Patent Office
Office européen des brevets

(11) EP 1 332 175 B1

(12) EUROPÄISCHE PATENTSCHRIFT

(45) Veröffentlichungstag und Bekanntmachung des Hinweises auf die Patenterteilung:
**19.03.2008 Patentblatt 2008/12**

(21) Anmeldenummer: **01988744.7**

(22) Anmeldetag: **15.10.2001**

(51) Int Cl.:
***C08K 5/3475*** (2006.01)

(86) Internationale Anmeldenummer:
**PCT/EP2001/011873**

(87) Internationale Veröffentlichungsnummer:
**WO 2002/034826 (02.05.2002 Gazette 2002/18)**

(54) **ZUSAMMENSETZUNG ENTHALTEND THERMOPLASTISCHE KUNSTSTOFFE**

COMPOSITION CONTAINING THERMOPLASTIC SYNTHETIC MATERIALS

COMPOSITIONS RENFERMANT DES MATIERES THERMOPLASTIQUES

(84) Benannte Vertragsstaaten:
**AT BE CH CY DE DK ES FI FR GB GR IE IT LI LU MC NL PT SE TR**

(30) Priorität: **26.10.2000 DE 10053152**

(43) Veröffentlichungstag der Anmeldung:
**06.08.2003 Patentblatt 2003/32**

(73) Patentinhaber: **Bayer MaterialScience AG**
**51368 Leverkusen (DE)**

(72) Erfinder:
- **GORNY, Rüdiger**
  **47800 Krefeld (DE)**
- **ANDERS, Siegfried**
  **51147 Köln (DE)**
- **NISING, Wolfgang**
  **53757 St. Augustin (DE)**
- **HAESE, Wilfried**
  **51519 Odenthal (DE)**

(56) Entgegenhaltungen:
**EP-A- 1 038 905**
**WO-A-01/90233**
**DE-A- 10 026 163**
**US-A- 5 106 891**
**US-A- 5 288 778**

- **PATENT ABSTRACTS OF JAPAN vol. 2000, no. 08, 6. Oktober 2000 (2000-10-06) & JP 2000 136270 A (DAINIPPON INK &CHEM INC), 16. Mai 2000 (2000-05-16)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 332 175 B1

Printed by Jouve, 75001 PARIS (FR)

**Beschreibung**

Die vorliegende Erfindung betrifft Zusammensetzungen enthaltend Polycarbonat und Benzotriazole und Triazine als UV-Absorber sowie daraus hergestellte Erzeugnisse. Bei den erfindungsgemäßen Erzeugnissen handelt es sich bevorzugt um mehrschichtige Platten, bei denen eine oder beide der äußeren Schichten aus den erfindungsgemäßen Zusammensetzungen bestehen.

Platten enthaltend thermoplastische Kunststoffe sind bekannt.

Polycarbonatplatten sind beispielsweise aus EP-A 0 110 221 bekannt und werden für eine Vielzahl von Anwendungszwecken bereitgestellt. Die Herstellung erfolgt beispielsweise durch Extrusion von Zusammensetzungen enthaltend Polycarbonat und gegebenenfalls Coextrusion mit Zusammensetzungen enthaltend Polycarbonat, die einen erhöhten Anteil an UV-Absorbern enthalten.

EP-A 0 320 632 und EP-A 0 247 480 beschreiben coextrudierte Platten aus Zusammensetzungen enthaltend Polycarbonat, die einen schwerflüchtigen UV-Absorber auf Basis substituierter Benzotriazole enthalten.

In EP-A 0 500 496 und EP-A 0 825 226 werden UV-Absorber auf Basis substituierter Triazine beschrieben, die geeignet sind um Polycarbonat vor UV-Strahlung zu schützen.

In EP-B 1 290 079 werden Zusammensetzung aus Carbonatpolymerem beschrieben, umfassend: (a) ein Carbonalpolymeres und (b) eine oder mehrere UV-absorbierende Verbindungen, ausgewählt aus zwei oder mehreren der folgenden Gruppen: (i) einem Hydroxybenzotriazolderivat, (ii) einem Hydroxyphenyltriazinderivat oder (iii) einer Cyanoacrylsäureesterverbindung, worin alle UV-absorbierenden Verbindungen (i), (ii) und (iii) ein Molekulargewicht von wenigstens 400g/Mol haben.

Ein bei der Extrusion solcher Platten auftretendes Problem ist das Absetzen flüchtiger Bestandteile aus den Zusammensetzungen enthaltend Polycarbonat oder allgemein thermoplastische Kunststoffe am Kalibrator (bei Stegplatten) oder auf den Walzen (bei Massivplatten), die zu Oberflächenstörungen führen können. Flüchtige Bestandteile sind beispielsweise UV-Absorber und andere niedermolekulare Bestandteile der Zusammensetzungen enthaltend thermoplastische Kunststoffe.

Nachteilig ist bei den Platten gemäß des Standes der Technik, dass bei längerer Extrusionsdauer die Oberfläche der Platten durch die genannten Ausdampfungen aus der Schmelze der Zusammensetzungen enthaltend Polycarbonat, besonders bei der Coextrusion, nachteilig beeinflusst wird.

Das vermehrte Ausdampfen des UV-Absorbers aus der Schmelze der Zusammensetzungen enthaltend Polycarbonat führt zur Belagsbildung am Kalibrator oder den Walzen und schließlich zur Bildung von Störungen der Plattenoberfläche (z.B. weiße Flecken, Welligkeit usw.). Am Kalibrator führt außerdem der Polycarbonatabrieb oder der Abrieb von thermoplastischen Kunststoffen allgemein zu pulverigen Ablagerungen auf den coextrudierten Polycarbonatplatten bzw. Platten aus thermoplastischen Kunststoffen.

Der vorliegenden Erfindung liegt somit die Aufgabe zugrunde, Zusammensetzungen enthaltend Polycarbonat dahingehend zu optimieren, dass bei der Extrusion der Zusammensetzungen zu Platten auch bei längerer kontinuierlicher Fahrweise die gute Qualität der Oberfläche der extrudierten Platten, bei gleichbleibendem Schutz gegen UV-Strahlung beibehalten werden kann.

Weiterhin besteht erfindungsgemäß die Aufgabe, aus den erfindungsgemäßen Zusammensetzungen erhältliche Erzeugnisse bereitzustellen.

Überraschend wurde gefunden, dass Zusammensetzungen, die neben Polycarbonat außerdem zwei verschiedene UV-Absorber in einem bestimmten Gewichtsverhältnis zueinander enthalten, die erfindungsgemäße Aufgabe lösen. Weiterhin lösen aus diesen Zusammensetzungen erhältliche Erzeugnisse die erfindungsgemäße Aufgabe.

Die erfindungsgemäße Aufgabe wird gelöst durch die Verwendung von Mischungen enthaltend eine oder mehrere verschiedene Verbindungen, der Formel (I)

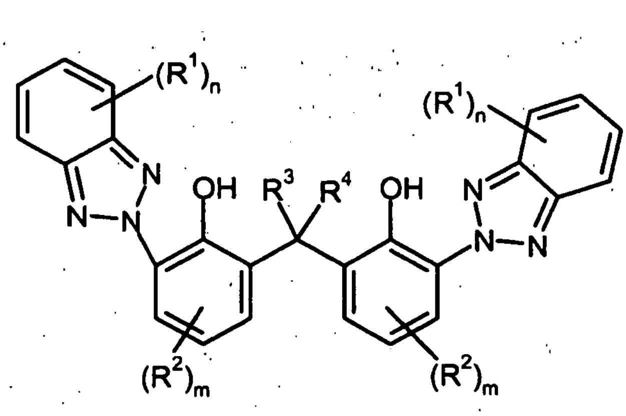

(I)

worin

$R^1$ und $R^2$ gleich oder verschieden sind und H, Halogen, $C_1$- bis $C_{10}$-Alkyl, $C_5$- bis $C_{10}$-Cycloalkyl, $C_7$- bis $C_{13}$-Aralkyl, $C_6$- bis $C_{14}$-Aryl, $-OR^5$ oder $-(CO)-O-R^5$ bedeuten, mit
$R^5$ gleich H oder $C_1$- bis $C_4$-Alkyl,

$R^3$ und $R^4$ gleich oder verschieden sind und H, $C_1$- bis $C_4$-Alkyl, $C_5$- bis $C_6$-Cycloalkyl, Benzyl oder $C_6$- bis $C_{14}$-Aryl bedeuten,

m 1, 2 oder 3 ist und

n 1, 2, 3 oder 4 ist,

und eine oder mehrere verschiedene Verbindungen der Formel (II)

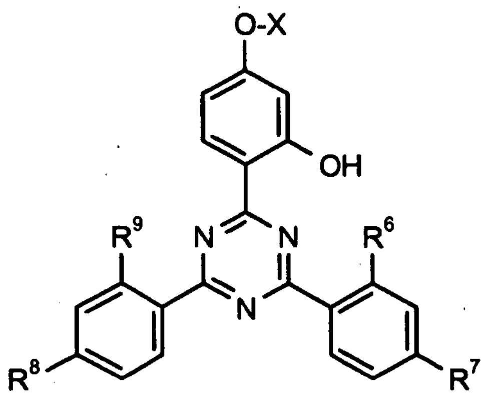

(II)

worin

$R^6$ bis $R^9$ gleich oder verschieden sind und H oder Alkyl oder CN oder Halogen sind und

X gleich Alkyl ist,

wobei der Anteil der Verbindungen nach Formel (I) und der Anteil der Verbindungen nach Formel (II) in der Mischung folgende Bedingung erfüllt:

$$\frac{\text{Anteil der Verbindungen nach Formel (I) in Gew.-\%}}{\text{Anteil der Verbindungen nach Formel (II) in Gew.-\%}} = \frac{0{,}2}{1} \text{ bis } \frac{4}{1},$$

in Zusammensetzungen enthaltend Polycarbonat zur Verbesserung der Extrusionseigenschaften dahingehend, dass bei der Extrusion der Zusammensetzungen zu Platten eine gute Qualität der Oberfläche der extrudierten Platten erhalten wird,
ausgenommen Mischungen enthaltend 2,2'-methylene-bis-(6-{2H-benzotriazol-2-yl}-4-{1,1,3,3-tetramethylbutyl}-phenol in 0,15 Gew.-% und 2-(4,6-diphenyl-1,3,5-triazin-2-yl)-5-hexyloxyphenol in 0.15 Gew.-% oder Mischungen enthaltend 2,2'-methylene-bis-(6-{2H-benzotriazol-2-yl}-4-{1,1,1,3,3-tetramethylybutyl}-phenol in 2.48 Gew.-% und 2-(4 6-diphenyl-1,3,5-triazin-2-yl)-5-hexyloxyphenol in 2,48 Gew.-%.

Weiterhin wird die erfindungsgemäße Aufgabe gelöst durch die Verwendung von Mischungen enthaltend eine oder mehrere verschiedene Verbindungen der Formel (III)

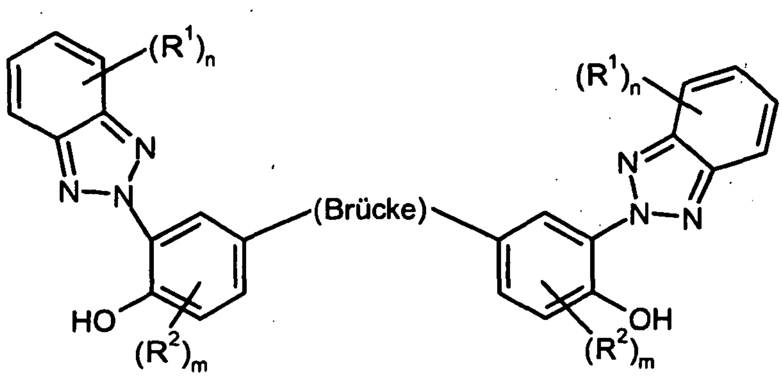

(III)

worin

R[1] und R[2] gleich oder verschieden sind und H, Halogen, $C_1$- bis $C_{10}$-Alkyl, $C_5$- bis $C_{10}$-Cycloalkyl, $C_7$- bis $C_{13}$-Aralkyl, $C_6$- bis $C_{14}$-Aryl, $-OR^5$ oder $-(CO)-O-R^5$ bedeuten, mit $R^5$ gleich H oder $C_1$- bis $C_4$-Alkyl,

m 1,2 oder 3 ist und

n 1, 2, 3 oder 4 ist,

Brücke gleich

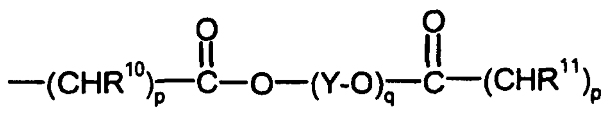

bedeutet, wobei

p gleich 0, 1, 2 oder 3 ist,

q eine ganze Zahl von 1 bis 10 ist,

Y $-CH_2-CH_2-$, $-(CH_2)_3-$, $-(CH_2)_4-$, $-(CH_2)_5-$, $-(CH_2)_6-$, oder $CH(CH_3)-CH_2-$ist und

$R^{10}$ und $R^{11}$ gleich oder verschieden sind und H, $C_1$- bis $C_4$-Alkyl, $C_5$- bis $C_6$-Cycloalkyl, Benzyl oder $C_6$- bis $C_{14}$-Aryl bedeuten,

und eine oder mehrere verschiedene Verbindungen der genannten Formel (II), wobei der Anteil der Verbindungen nach Fonnel (III) und der Anteil der Verbindungen nach Formel (II) in der Mischung folgende Bedingung erfüllt:

$$\frac{\text{Anteil der Verbindungen nach Formel (III) in Gew.-\%}}{\text{Anteil der Verbindungen nach Formel (II) in Gew.-\%}} = \frac{0,2}{1} \text{ bis } \frac{4}{1},$$

in Zusammensetzungen enthaltend Polycarbonat zur Verbesserung der Extrusionseigenschaften dahingehend, dass bei der Extrusion der Zusammensetzungen zu Platten eine gute Qualität der Oberfläche der extrudierten Platten erhalten wird.

Die Verwendung von Mischungen aus Verbindungen der Formel (I) und (II) bzw. (III) und (II) im Sinne der obigen Absätze bedeutet nicht zwangsläufig, dass die Verbindungen der Formel (I) und (II) bzw. (III) und (II) zuerst untereinander gemischt werden müssen, bevor sie zur Stabilisierung von thermoplastischen Kunststoffen gegen UV-Strahlung eingesetzt werden. Jede Verwendung, die dazu führt, dass Verbindungen der Formel (I) und Verbindungen der Formel (II) bzw. Verbindungen der Formel (III) und Verbindungen der Formel (II) gleichzeitig in Polycarbonat zum UV-Schutz wirksam sind, ist erfindungsgemäß möglich. Beispielsweise kann dem Polycarbonat erst Verbindungen der Formel (I) und danach Verbindungen der Formel (II) zugeführt werden.

Weiterhin wird die erfindungsgemäße Aufgabe gelöst durch eine Zusammensetzung enthaltend
Polycarbonat und
eine oder mehrere verschiedene Verbindungen der Formel (I)
und eine oder mehrere verschiedene Verbindungen der Formel (II),
wobei der Anteil der Verbindungen nach Formel (I) und der Anteil der Verbindungen nach Formel (II) in der Zusammensetzung folgende Bedingung erfüllt:

$$\frac{\text{Anteil der Verbindungen nach Formel (I) in Gew.-\%}}{\text{Anteil der Verbindungen nach Formel (II) in Gew.-\%}} = \frac{0{,}2}{1} \text{ bis } \frac{4}{1}.$$

Bevorzugt ist dieses Verhältnis gleich $^{0,6}/_{1}$ bis $^{1,6}/_{1}$.

Weiterhin wird die erfindungsgemäße Aufgabe gelöst durch eine Zusammensetzung enthaltend
Polycarbonat und
eine oder mehrere verschiedene Verbindungen der allgemeinen Formel (III)
und eine oder mehrere verschiedene Verbindungen der allgemeinen Formel (II),
wobei der Anteil der Verbindungen nach Formel (III) und der Anteil der Verbindungen nach Formel (II) in der Zusammensetzung folgende Bedingung erfüllt:

$$\frac{\text{Anteil der Verbindungen nach Formel (III) in Gew.-\%}}{\text{Anteil der Verbindungen nach Formel (II) in Gew.-\%}} = \frac{0{,}2}{1} \text{ bis } \frac{4}{1}.$$

Bevorzugt ist dieses Verhältnis gleich $^{0,6}/_{1}$ bis $^{1,6}/_{1}$.

Bevorzugte Verbindungen der Formeln (I), (II) und (III) sind diejenigen mit

$R^1$ gleich H, $R^2$ gleich $C_1$- bis $C_8$-Alkyl, besonders bevorzugt $R^2$ gleich tert.-Butyl oder $C_8$-Alkyl, ganz besonders bevorzugt $R^2$ gleich Isooctyl, $R^3$ gleich H, $R^4$ gleich H, m gleich 1 und n gleich 4,

und

$R^6$ bis $R^9$ gleich oder verschieden H oder $CH_3$, X gleich $C_6$-Alkyl oder $C_8$-Alkyl

und

$R^{10}$ gleich H, $R^{11}$ gleich H, p gleich 0, 1, 2 oder 3, q gleich 1 bis 8 und Y gleich $-(CH_2)_6-$ oder $-(CH_2)_2-$.

Bevorzugt hat in den erfindungsgemäßen Zusammensetzungen die Summe aller Verbindungen nach Formel (I) und Formel (II) bzw. nach Formel (II) und Formel (II) einen Anteil von 0,05 bis 15 Gew.-%, bevorzugt 0,1 bis 10 Gew.-%.

Bevorzugt ist eine Zusammensetzung, in der die Summe aus Polycarbonat und Verbindungen nach Formel (I) und Verbindungen nach Formel (II) und Verbindungen nach Formel (III) in der Zusammensetzung 60 bis 100 Gew.-% beträgt.

Weiterhin besonders bevorzugt ist Polycarbonat, das ausgewählt ist aus der Gruppe bestehend aus Bisphenol A Homopolycarbonat und Copolycarbonate auf Basis der beiden Monomere Bisphenol A und 1,1-Bis-(4-hydroxyphenyl)-3,3,5-trimethylcyclohexan.

Weiterhin bevorzugt ist eine erfindungsgemäße Zusammensetzung die zusätzlich 0,01 bis 0,5 Gew.-% Ester

oder Teilesteer von ein- bis sechswertigen Alkoholen enthält

Weiterhin bevorzugt ist eine erfindungsgemäße Zusammensetzung die zusätzlich 10 bis 3000 ppm Thermostabilisatoren enthält.

Dabei sind die Thermostabilisatoren bevorzugt ausgewählt aus der Gruppe bestehend aus Tris-(2,4-di-tert.butylphenyl)phosphit und Triphenylphosphin.

Weiterhin wird die erfindungsgemäße Aufgabe gelöst durch ein Erzeugnis enthaltend eine erfindungsgemäße Zusammensetzung.

Das erfindungsgemäße Erzeugnis ist bevorzugt ausgewählt aus der Gruppe bestehend aus einschichtiger Massivplatte, mehrschichtiger Massivplatte, einschichtiger Stegplatte, mehrschichtiger Stegplatte, gewellter Massivplatte, Stegprofil, Stegprofil mit Nut und Feder, Verbindungssystem, Verscheibung für Gewächshäuser, Verscheibung für Wintergärten, Verscheibung für Bushaltestellen, Reklametafel, Schild, Schutzscheibe, Automobilverscheibung, Fenster und Überdachung.

Bevorzugt ist eine mehrschichtige Platte, wobei mindestens eine Schicht eine erfindungsgemäße Zusammensetzung enthält.

Weiterhin bevorzugt ist eine mehrschichtige Platte, wobei eine der äußersten Schichten der Platte oder beide äußerste Schichten der Platte eine erfindungsgemäße Zusammensetzung enthalten.

Dabei ist es besonders bevorzugt, dass die Platte mindestens zwei Schichten hat und dass mindestens eine der inneren Schichten eine erfindungsgemäße Zusammensetzung enthält, deren Gehalt an Verbindungen nach Formel (I) und Verbindungen nach Formel (II) bzw. Verbindungen nach Formel (III) und Verbindungen nach Formel (II) in Summe bevorzugt 0,02 bis 1 Gew.-% beträgt.

Das bevorzugte Verfahren zur Herstellung der erfindungsgemäßen Platten ist die Coextrusion.

Zusätzlich können die erfindungsgemäßen Zusammensetzungen übliche Additive, insbesondere übliche Verarbeitungshilfsmittel, insbesondere Entformungsmittel und Fließmittel sowie Stabilisatoren, insbesondere Thermostabilisatoren, enthalten.

Im Rahmen der vorliegenden Erfindung werden die Verbindungen gemäß Formel (I), (II) und (III) der Einfachheit halber als UV-Absorber bezeichnet.

Die erfindungsgemäßen Zusammensetzungen enthalten bevorzugt insgesamt 0,05 bis 15 Gew.-%, besonders bevorzugt 0,1 bis 10 Gew.-%, ganz besonders bevorzugt 2 bis 8 Gew.-% UV-Absorber.

Die erfindungsgemäßen Zusammensetzungen und die daraus hergestellten Erzeugnisse, insbesondere Platten, haben zahlreiche Vorteile. Die aus dem Stand der Technik bekannten Probleme, wie z.B. das Absetzen flüchtiger Bestandteile aus den Zusammensetzungen an Kalibratoren oder Walzen bei der Extrusion, treten nicht auf. Dieser Vorteil der erfindungsgemäßen Zusammensetzungen tritt besonders dann auf, wenn die erfindungsgemäßen Zusammensetzungen zur Herstellung mehrschichtiger Platten verwendet werden, wobei eine oder beide der äußeren Schichten der Platten aus den erfindungsgemäßen Zusammensetzungen bestehen oder diese enthalten. Für diesen Fall beträgt der Anteil an UV-Absorber in den erfindungsgemäßen Zusammensetzungen in der einen oder in beiden äußeren Schichten bevorzugt 2 bis 8 Gew.-%. Die erfindungsgemäßen Zusammensetzungen sind gut gegen UV-Strahlung geschützt.

Die erfindungsgemäßen Zusammensetzungen und die daraus hergestellten Erzeugnisse haben darüber hinaus zahlreiche weitere Vorteile. Beispielsweise haben die erfindungsgemäßen Erzeugnisse gute mechanische Eigenschaften, die im wesentlichen denen des verwendeten thermoplastischen Kunststoffes entsprechen. Darüber hinaus haben die erfindungsgemäßen Erzeugnisse für den Fall, dass transparente thermoplastische Kunststoffe eingesetzt werden gute optische Eigenschaften, beispielsweise hohe Transparenz.

Die erfindungsgemäßen Zusammensetzungen enthaltend thermoplastische Kunststoffe haben sich technisch besonders vorteilhaft erwiesen. Sie lassen sich problemlos verarbeiten und zeigen in den als Produkt erhaltenen Erzeugnisse keine Beeinträchtigungen.

Die Witterungsbeständigkeit der erfindungsgemäßen Platten entspricht mindestens der von Platten, die nach dem Stand der Technik hergestellt worden sind.

Die erfindungsgemäß zu verwendenden Verbindungen nach Formel (I), (II) und (III) sind kommerziell erhältlich. Sie lassen sich nach bekannten Verfahren herstellen.

Die Summe der Gewichtsanteile aus thermoplastischen Kunststoffen und UV-Absorber in den erfindungsgemäßen Zusammensetzungen ist bevorzugt 60 bis 100 Gew.-%, besonders bevorzugt 80 bis 100 Gew.-%, ganz besonders bevorzugt 90 bis 100 Gew.-%.

Die erfindungsgemäßen Zusammensetzungen können neben den explizit genannten Bestandteilen noch übliche Additive in den üblichen Mengen enthalten. Eine besonders bevorzugte Ausführungsform der Erfindung ist gegeben, wann neben den explizit genannten Bestandteilen keine weiteren Bestandteile in den erfindungsgemäßen Zusammensetzungen enthalten sind, d.h. wann die erfindungsgemäßen Zusammensetzungen aus den explizit genannten Bestandteilen bestehen.

Verbindungen der Formel (I) wie 2,2-Methylenbis-(4-(1,1,3,3-tetramethylbutyl)-6-(2H-benztriazol-2-yl)phenol), werden im Handel unter der Bezeichnung Tinuvin® 360 oder Adeka Stab® LA 31 vertrieben. Verbindungen der Formel

(II) sind 2,4-Bis(2,4-dimethylphenyl)-6-(2-hydroxy-4-n-octyloxyphenyl)-1,3,5-triazin (CYASORB® UV-1164) oder 2-(4,6-Diphenyl-1,3,5-triazin-2-yl)-5-(hexyl)oxy-Phenol (Tinuvin® 1577). Vertreiber der Tinuvine ist die Firma Ciba Spezialitätenchemie, Lampertheim, Deutschland. Vertreiber des Cyasorb ist die Firma Cytec Industria Inc., West Paterson, New Jersey, USA.

Polycarbonate für die erfindungsgemäßen Zusammensetzungen oder die daraus erhältlichen Erzeugnisse sind Homopolycarbonate, Copolycarbonate und thermoplastische Polyestercarbonate. Sie haben bevorzugt mittlere Molekulargewichte $\overline{M}_w$ von 18.000 bis 40.000, vorzugsweise von 26.000 bis 36.000 und insbesondere von 28.000 bis 35.000 g/mol, ermittelt durch Messung der rel. Lösungsviskosität in Dichlormethan oder in Mischungen gleicher Gewichtsmengen Phenol/o-Dichlorbenzol geeicht durch Lichtstreuung. Dabei soll im Falle der Coextrusion die Schmelzeviskosität der Coextrusionsmassen vorzugsweise kleiner sein als die des Substrates, auf die sie aufgebracht werden.

Zur Herstellung von Polycarbonaten sei beispielhaft auf "Schnell", Chemistry and Physics of Polycarbonates, Polymer Reviews, Vol. 9, Interscience Publishers, New York, London, Sydney 1964, auf D.C. PREVORSEK, B.T. DEBONA and Y. KESTEN, Corporate Research Center, Allied Chemical Corporation, Moristown, New Jersey 07960, "Synthesis of Poly(ester)carbonate Copolymers" in Journal of Polymer Science, Polymer Chemistry Edition, Vol. 19, 75-90 (1980), auf D. Freitag, U. Grigo, P.R. Müller, N. Nouvertne, BAYER AG, "Polycarbonates" in Encyclopedia of Polymer Science and Engineering, Vol. 11, Second Edition, 1988, Seiten 648-718 und auf U. Grigo, K. Kircher und P.R. Müller "Polycarbonate" in Becker/Braun, Kunststoff Handbuch, Band 3/1, Polycarbonate, Polyacetale, Polyester, Celluloseester, Carl Hanser Verlag München, Wien 1992, Seiten 117-299 verwiesen. Die Herstellung erfolgt vorzugsweise nach dem Phasengrenzflächenverfahren oder dem Schmelze-Umesterungsverfahren und wird beispielhaft an dem Phasengrenzflächenverfahren beschrieben.

Als Ausgangsverbindungen bevorzugt einzusetzende Verbindungen sind Bisphenole der allgemeinen Formel HO-Z-OH, worin Z ein divalenter organischer Rest mit 6 bis 30 Kohlenstoffatomen ist, der eine oder mehrere aromatische Gruppen enthält. Beispiele solcher Verbindungen sind Bisphenole, die zu der Gruppe der Dihydroxydiphenyle, Bis(hydroxyphenyl)alkane, Indanbisphenole, Bis(hydroxyphenyl)ether, Bis(hydroxyphenyl)sulfone, Bis(hydroxyphenyl)ketone und $\alpha,\alpha'$-Bis(hydroxyphenyl)-diisopropylbenzole gehören.

Besonders bevorzugte Bisphenole, die zu den vorgenannten Verbindungsgruppen gehören, sind Bisphenol-A, Tetraalkylbisphenol-A, 4,4-(meta-Phenylendiisopropyl) diphenol (Bisphenol M), 4,4-(para-Phenylendiisopropyl)diphenol, 1,1-Bis-(4-hydroxyphenyl)-3,3,5-trimethylcyclohexan (BP-TMC) sowie gegebenenfalls deren Gemische. Besonders bevorzugt sind Homopolycarbonate auf Basis Bisphenol-A und Copolycarbonate auf der Basis der Monomere Bisphenol-A und 1,1-Bis-(4-hydroxyphenyl)-3,3,5-trimethylcyclohexan. Die erfindungsgemäß einzusetzenden Bisphenolverbindungen werden mit Kohlensäureverbindungen, insbesondere Phosgen oder beim Schmelzeumesterungsprozess Diphenylcarbonat bzw. Dimethylcarbonat, umgesetzt.

Polyestercarbonate werden durch Umsetzung der bereits genannten Bisphenole, mindestens einer aromatischen Dicarbonsäure und gegebenenfalls Kohlensäureäquivalente erhalten. Geeignete aromatische Dicarbonsäuren sind beispielsweise Phthalsäure, Terephthalsüure, Isophthalsäure, 3,3'- oder 4,4'-Diphenyldicarbonsäure und Benzophenondicarbonsäuren. Ein Teil, bis zu 80 Mol.-%, vorzugsweise von 20 bis 50 Mol.-% der Carbonatgruppen in den Polycarbonaten können durch aromatische Dicarbonsäureester-Gruppen ersetzt sein.

Beim Phasengrenzflächenverfahren verwendete inerte organische Lösungsmittel sind beispielsweise Dichlormethan, die verschiedenen Dichlorethane und Chlorpropanverbindungen, Tetrachlormethan, Trichlormethan, Chlorbenzol und Chlortoluol, vorzugsweise werden Chlorbenzol oder Dichlormethan bzw. Gemische aus Dichlormethan und Chlorbenzol eingesetzt.

Die Phasengrenzflächenreaktion kann durch Katalysatoren wie tertiäre Amine, insbesondere N-Alkylpiperidine oder Oniumsalze beschleunigt werden. Bevorzugt werden Tributylamin, Triethylamin und N-Ethylpiperidin verwendet. Im Falle des Schmelzeumesterungsprozesses werden bevorzugt die in DE-A 42 38 123 genannten Katalysatoren verwendet.

Die Polycarbonate können durch den Einsatz geringer Mengen Verzweiger bewusst und kontrolliert verzweigt werden. Einige geeignete Verzweiger sind: Phloroglucin, 4,6-Dimethyl-2,4,6-tri-(4-hydroxyphenyl)-hepten-2; 4,6-Dimethyl-2,4,6-tri-(4-hydroxyphenyl)-heptan; 1,3,5-Tri-(4-hydroxyphenyl)-benzol; 1,1,1-Tri-(4-hydroxyphenyl)-ethan; Tri-(4-hydroxyphenyl)-phenylmethan; 2,2-Bis-[4,4-bis-(4-hydroxyphenyl)-cyclohexyl]-propan; 2,4-Bis-(4-hydroxyphenyl-isopropyl)-phenol; 2,6-Bis-(2-hydroxy-5'-methyl-benzyl)-4-methylphenol; 2-(4-Hydroxyphenyl)-2-(2,4-dihydroxyphenyl)-propan; Hexa-(4-(4-hydroxyphenyl-isopropyl)-phenyl)-orthoterephthalsäureester; Tetra-(4-hydroxyphenyl)-methan; Tetra-(4-(4-hydroxyphenyl-isopropyl)-phenoxy)-methan; $\alpha,\alpha',\alpha''$-Tris-(4-hydroxyphenyl)-1,3,5-triisopropylbenzol; 2,4-Dihydroxybenzoesäure; Trimesinsäure; Cyanurchlorid; 3,3-Bis-(3-methyl-4-hydroxyphenyl)-2-oxo-2,3-dihydroindol; 1,4-Bis-(4',4''-dihydroxytriphenyl)-methyl)-benzol und insbesondere: 1,1,1-Tri-(4-hydroxyphenyl)-ethan und Bis-(3-methyl-4-hydroxyphenyl)-2-oxo-2,3-dihydroindol.

Die gegebenenfalls mitzuverwendenden 0,05 bis 2 Mol.-%, bezogen auf eingesetzte Diphenole, an Verzweigern bzw. Mischungen der Verzweiger, können mit den Diphenolen zusammen eingesetzt werden aber auch in einem späteren Stadium der Synthese zugegeben werden.

Als Kettenabbrecher, die ebenfalls verwendet werden können, werden bevorzugt Phenole wie Phenol, Alkylphenole wie Kresol und 4-tert.-Butylphenol, Chlorphenol, Bromphenol, Cumylphenol oder deren Mischungen verwendet in Mengen von 1-20 Mol.-% bevorzugt 2-10 Mol.-% je Mol Bisphenol. Bevorzugt sind Phenol, 4-tert.-Butylphenol bzw. Cumylphenol.

Kettenabbrecher und Verzweiger können getrennt oder aber auch zusammen mit dem Bisphenol den Synthesen zugesetzt werden.

Die Herstellung der Polycarbonate nach dem Schmelzeumesterungsprozess ist in DE-A 42 38 123 beispielhaft beschrieben.

Die erfindungsgemäßen Zusammensetzungen können auch Stabilisatoren enthalten.

Geeignete Stabilisatoren für die erfindungsgemäßen Zusammensetzungen enthaltend Polycarbonat sind beispielsweise Phosphine, Phosphite oder Si enthaltende Stabilisatoren und weitere in EP-A 0 500 496 beschriebene Verbindungen. Beispielhaft seien Triphenylphosphite, Diphenylalkylphosphite, Phenyldialkylphosphite, Tris-(nonylphenyl)phosphit, Tetrakis-(2,4-di-tert.-butylphenyl)-4,4'-biphenylen-diphosponit und Triarylphosphit genannt. Besonders bevorzugt sind Triphenylphosphin und Tris-(2,4-di-tert.-butylphenyl)phosphit.

Ferner können die erfindungsgemäßen Zusammensetzungen 0.01 bis 0.5 Gew.-% der Ester oder Teilester von ein- bis sechswertigen Alkoholen, insbesondere des Glycerins, des Pentaerythrits oder von Guerbetalkoholen enthalten.

Einwertige Alkohole sind beispielsweise Stearylalkohol, Palmitylalkohol und Guerbetalkohole.
Ein zweiwertiger Alkohol ist beispielsweise Glycol.
Ein dreiwertiger Alkohol ist beispielsweise Gylcerin.
Vierwertige Alkohole sind beispielsweise Pentaerythrit und Mesoerythrit.
Fünfwertige Alkohole sind beispielsweise Arabit, Ribit und Xylit.
Sechswertige Alkohole sind beispielsweise Mannit, Glucit (Sorbit) und Dulcit.

Die Ester sind bevorzugt die Monoester, Diester, Triester, Tetraester gegebenenfalls Pentaester und Hexaester oder deren Mischungen, insbesondere statistische Mischungen, aus gesättigten, aliphatischen $C_{10}$- bis $C_{36}$-Monocarbonsäuren und gegebenenfalls Hydroxy-Monocarbonsäuren, vorzugsweise mit gesättigten, aliphatischen $C_{14}$- bis $C_{32}$-Monocarbonsäuren und gegebenenfalls Hydroxy-Monocarbonsäuren.

Die kommerziell erhältlichen Fettsäureester, insbesondere des Pentaerythrits und des Glycerins, können herstellungsbedingt bis zu 60 % unterschiedlicher Teilester enthalten.

Gesättigte, aliphatische Monocarbonsäuren mit 10 bis 36 C-Atomen sind beispielsweise Caprinsäure, Laurinsäure, Myristinsäure, Palmitinsäure, Stearinsäure, Hydroxystearinsäure, Arachinsäure, Behensäure, Lignocerinsäure, Cerotinsäure und Montansäuren.

Bevorzugte gesättigte, aliphatische Monocarbonsäuren mit 14 bis 22 C-Atomen sind beispielsweise Myristinsäure, Palmitinsäure, Stearinsäure, Hydroxystearinsäure, Arachinsäure und Behensäure.

Besonders bevorzugt sind gesättigte, aliphatische Monocarbonsäuren wie Palmitinsäure, Stearinsäure und Hydroxystearinsäure.

Die gesättigten, aliphatischen $C_{10}$- bis $C_{36}$-Carbonsäuren und die erfindungsgemäß einzusetzenden Fettsäureester sind als solche entweder literaturbekannt oder nach literaturbekannten Verfahren herstellbar. Beispiele für Pentaerythritfettsäureester sind die der besonders bevorzugten, vorstehend genannten Monocarbonsäuren.

Besonders bevorzugt sind Ester des Pentaerythrits und des Glycerins mit Stearinsäure und Palmitinsäure.

Besonders bevorzugt sind auch Ester von Guerbetalkoholen und des Glycerins mit Stearinsäure und Palmitinsäure und gegebenenfalls Hydroxystearinsäure.

Beispiele für Antistatika, die in den erfindungsgemäßen Zusammensetzungen enthalten sein können, sind kationaktive Verbindungen, beispielsweise quartäre Ammonium-, Phosphonium- oder Sulfoniumsalze, anionaktive Verbindungen, beispielsweise Alkylsulfonate, Alkylsulfate, Alkylphosphate, Carboxylate in Form von Alkali- oder Erdalkalimetallsalzen, nichtionogene Verbindungen, beispielsweise Polyethylenglykolester, Polyethylenglykolether, Fettsäureester, ethoxylierte Fettamine. Bevorzugte Antistatika sind nichtionogene Verbindungen.

Ferner können die erfindungsgemäßen Zusammensetzungen organische Farbstoffe, anorganische Farbpigmente, Fluoreszenzfarbstoffe und optische Aufheller enthalten.

Alle für die Synthese der erfindungsgemäßen Coextrusionsmassen verwandten Einsatzstoffe und Lösungsmittel können aus ihrer Herstellung und Lagerung mit entsprechenden Verunreinigungen kontaminiert sein, wobei es das Ziel ist, mit so sauberen Ausgangsstoffen wie möglich zu arbeiten.

Das Vermischen der einzelnen Bestandteile kann in bekannter Weise sowohl sukzessive als auch simultan erfolgen und zwar sowohl bei Raumtemperatur als auch bei erhöhter Temperatur.

Die Einarbeitung der Zusätze in die erfindungsgemäßen Zusammensetzungen insbesondere der UV-Absorber und weiterer vorgenannter Additive erfolgt bevorzugt in bekannter Weise durch Vermischen von Polymergranulat mit den Zusätzen bei Temperaturen für Polycarbonat von bevorzugt etwa 200 bis 350°C in üblichen Aggregaten wie Innenknetern, Einschneckenextrudern und Doppelwellenextrudern beispielsweise durch Schmelzecompoundierung oder

Schmelzeextrusion oder durch Vermischen der Lösungen des Polymers mit Lösungen der Additive und anschließende Verdampfung der Lösungsmittel in bekannter Weise. Der Anteil der Additive in der Formmasse kann in weiten Grenzen variiert werden und richtet sich nach den gewünschten Eigenschaften der Zusammensetzungen. Der Gesamtanteil der Additive in den Zusammensetzungen beträgt bevorzugt etwa bis zu 20 Gew.-%, vorzugsweise 0,1 bis 12 Gew.-%, bezogen auf das Gewicht der Zusammensetzung.

Die Einarbeitung der UV-Absorber in die erfindungsgemäßen Zusammensetzungen kann beispielsweise auch geschehen durch Vermischen von Lösungen der UV-Absorber und gegebenenfalls weiterer vorgenannter Additive mit Lösungen der Kunststoffe in geeigneten organischen Lösungsmitteln. Für Polycarbonat sind dies beispielsweise $CH_2Cl_2$, Halogenalkanen, Halogenaromaten, Chlorbenzol und Xylolen. Die Substanzgemische werden dann bevorzugt in bekannter Weise durch Extrusion homogenisiert. Die Lösungsgemische werden bevorzugt in bekannter Weise durch Ausdampfen des Lösungsmittels und anschließender Extrusion entfernt, beispielsweise compoundiert.

Wie die erfindungsgemäßen Beispiele belegen, bietet die Verwendung der erfindungsgemäßen Zusammensetzungen als Coextrusionsmassen einen signifikanten Vorteil auf beliebigen Formmassen als Basismaterial.

Gegenstand der Erfindung sind auch Erzeugnisse, die unter Mitverwendung der erfindungsgemäßen Zusammensetzungen enthaltend thermoplastische Kunststoffe hergestellt worden sind. Die Zusammensetzungen enthaltend thermoplastische Kunststoffe können zur Erzeugung von massiven Kunststoffplatten und sogenannten Stegplatten (z.B. Stegdoppelplatten oder Stegdreifachplatten) eingesetzt werden. Die Platten umfassen also auch solche, die auf einer Seite oder beiden Seiten eine zusätzliche Deckschicht mit der erfindungsgemäßen Zusammensetzungen enthaltend thermoplastische Kunststoffe mit einem erhöhten UV-Absorbergehalt aufweisen.

Die erfindungsgemäßen Zusammensetzungen enthaltend thermoplastische Kunststoffe erlauben die erleichterte Herstellung von Erzeugnissen, insbesondere von Platten und aus ihnen hergestellte Erzeugnisse wie z.B. Verscheibungen für Gewächshäuser, Wintergärten, Bushaltestellen, Reklametafeln, Schilder, Schutzscheiben, Automobilverscheibungen, Fenster und Überdachungen.

Nachträgliche Bearbeitungen der mit der erfindungsgemäßen Zusammensetzungen enthaltend thermoplastische Kunststoffe beschichteten Erzeugnisse, wie z.B. Tiefziehen oder Oberflächenbearbeitungen, wie z.B. Ausrüstung mit Kratzfestlacken, wasserspreitenden Schichten und ähnliches sind möglich und die durch diese Verfahren hergestellten Erzeugnisse sind ebenfalls Gegenstand der vorliegenden Erfindung.

Die Coextrusion als solche ist literaturbekannt (siehe beispielsweise EP-A 110 221 und EP-A 110 238). Im vorliegenden Fall wird vorzugsweise wie folgt verfahren:

An einem Coextrusionsadapter sind Extruder zur Erzeugung der Kernschicht und der Deckschicht(en) angeschlossen. Der Adapter ist so konstruiert, dass die die Deckschicht(en) formende Schmelze als dünne Schicht haftend auf die Schmelze der Kernschicht aufgebracht werden.

Der so erzeugte, mehrschichtige Schmelzestrang wird dann bevorzugt in der anschließend angeschlossenen Düse in die gewünschte Form (Steg- oder Massivplatte) gebracht. Anschließend wird bevorzugt in bekannter Weise mittels Kalandrierung (Massivplatte) oder Vakuumkalibrierung (Stegplatte) die Schmelze unter kontrollierten Bedingungen abgekühlt und anschließend abgelängt. Gegebenenfalls kann nach der Kalibrierung ein Temperofen zur Eliminierung von Spannungen angebracht werden. Anstelle des vor der Düse angebrachten Adapters kann auch die Düse selbst so ausgelegt sein, dass dort die Zusammenführung der Schmelzen erfolgt.

Die Erfindung wird durch das folgende Beispiel weiter erläutert.

## Beispiel

10 mm Stegdoppelplatten A bis E, wie sie beispielweise in EP-A 0 110 238 beschrieben sind, wurden aus folgenden Zusammensetzungen enthaltend Polycarbonat erhalten: Als Basismaterial wurde Makrolon® KU 1-1243 (verzweigtes Bisphenol-A Polycarbonat der Bayer AG, Leverkusen, Deutschland mit einem Schmelzflussindex (MFR) von 6,5 g/10 min bei 300°C und 1,2 kg Belastung) verwendet. Coextrudiert wurde dieses mit den in der Tabelle angegebenen Compounds auf Basis Makrolon® 3100 (lineares Bisphenol-A Polycarbonat der Bayer AG, Leverkusen, Deutschland mit einem Schmelzflussindex (MFR) von 6,5 g/10 min bei 300°C und 1,2 kg Belastung).

Die Dicke der Coex-Schicht betrug jeweils etwa 50 μm.

| Platte | Tinuvin® 360*) | Tinuvin® 1577***) | Entformungsmittel | Verhältnis der UV-Absorber (berechnet) |
|---|---|---|---|---|
| A (Vergleich) | 5% | 0 | 0,25 % PETS**) | 5 / 0 |
| B | 4 % | 1 % | 0,25 % PETS**) | 4 / 1 |
| C | 3 % | 2 % | 0,25 % PETS**) | 3 / 2 |

(fortgesetzt)

| Platte | Tinuvin® 360*) | Tinuvin® 1577***) | Entformungsmittel | Verhältnis der UV-Absorber (berechnet) |
|---|---|---|---|---|
| D | 1 % | 3 % | 0,25 % PETS**) | 1 / 3 |
| E (Vergleich) | 0 | 3,5 % | 0,25 % PETS**) | 0 / 3,5 |

*) 2,2-Methylenbis-(4-(1,1,3,3-tetramethylbutyl)-6-(2H-benztriazol-2-yl)phenol), im Handel erhältlich, Tinuvin® 360 der Firma Ciba Spezialitätenchemie, Lampertheim, Deutschland; fällt unter Formel (I)
**) Pentaerythrittetrastearat, im Handel erhältlich, Loxiol® VPG 861 der Firma Cognis, Düsseldorf, Deutschland
***) 2-(4,6-Diphenyl-1,3,5-triazin-2-yl)-5-(hexyl)oxy-phenol, im Handel erhältlich, Tinuvin® 1577 der Firma Ciba Spezialitätenchemie, Lampertheim, Deutschland; fällt unter Formel (II)

Die verwendeten Maschinen und Apparate zur Herstellung der Compounds und zur folgenden Herstellung von mehrschichtigen Stegplatten werden im Folgenden beschrieben:
Die Einrichtung zur Compoundierung bestand aus

- Dosiereinrichtungen für die Komponenten
- einem gleichlaufenden Zweiwellenkneter (ZSK 53 von der Firma Werner & Pfleiderer) mit einem Schneckendurchmesser von 53 mm
- einer Lochdüse zur Ausformung von Schmelzesträngen
- einem Wasserbad zur Abkühlung und dem Verfestigen der Stränge
- einem Granulator

Die verwendeten Maschinen und Apparate zur Herstellung von mehrschichtigen Stegplatten werden im Folgenden beschrieben:
Die Einrichtung bestand aus

- dem Hauptextruder mit einer Schnecke der Länge 33 D und einem Durchmesser von 70 mm mit Entgasung
- dem Coexadapter (Feedblocksystem)
- einem Coextruder zum Aufbringen der Deckschicht mit einer Schnecke der Länge 25 D und einem Durchmesser von 30 mm
- der speziellen Breitschlitzdüse mit 350 mm Breite
- dem Kalibrator
- der Rollenbahn
- der Abzugseinrichtung
- der Ablängvorrichtung (Säge)
- dem Ablagetisch.

Das Polycarbonat-Granulat des Basismaterials wurde dem Fülltrichter des Hauptextruders zugeführt, das UV-Coextrusionsmaterial dem des Coextruders. Im jeweiligen Plastifiziersystem Zylinder/Schnecke erfolgte das Aufschmelzen und Fördern des jeweiligen Materials. Beide Materialschmelzen wurden im Coexadapter zusammengeführt und bildeten nach Verlassen der Düse und Abkühlen im Kalibrator einen Verbund. Die weiteren Einrichtungen dienten dem Transport, Ablängen und Ablegen der extrudierten Platten.
Die erhaltenen Platten wurden anschließend einer farbmetrischen Bewertung unterzogen. Dabei wurden folgendes Bewitterungsverfahren gemäß ISO 4892-A herangezogen:

> Die Bewitterung dieser Platten erfolgte im Weather-o-meter der Firma Atlas, USA mit einem 6,5 W-Xenon-Brenner bei einem Zyklus von 102 min Belichtung und 18 min Besprühung mit entmineralisiertem Wasser unter Belichtung. Die maximale Schwarztafeltemperatur betrug 60 ±5°C. Nach je 1 000 h wurden die Platten abgemustert.

<u>Coextrusion mit A (Vergleich):</u>

- erste kleinere Ablagerungen nach 80 min
- nach 2 Stunden Verwerfungen der Stege

Note: schlecht

Coextrusion mit E (Vergleich):

- erste kleinere Ablagerungen nach 45 min
- nach 2 Stunden großflächig auftretende Ablagerungen

Note: schlecht

Coextrusion mit B:

- erste kleinere Ablagerungen nach 90 min
- nach 3 Stunden großflächig auftretende Ablagerungen

Note: befriedigend

Coextrusion mit C:

- erste kleinere Ablagerungen nach 90 min, die sich auch nach 3 Stunden nicht merklich vergrößern

Note: gut

Coextrusion mit D:

- erste kleinere Ablagerungen nach 90 min, die sich auch nach 3 Stunden nicht merklich vergrößern

Note: gut

Die nachfolgende Tabelle zeigt, dass Platten, die mit den erfindungsgemäßen Zusammensetzungen enthaltend Polycarbonat coextrudiert sind, bei der künstlichen Bewitterung näherungsweise die gleiche Vergilbung (gemessen als Yellowness-Index gemäß ASTM-E 313) zeigen (Xe-WOM), wie nach dem Stand der Technik stabilisierte Platten (A und E).

| Platte | Yellowness Index 0 Stunden | Yellowness Index 10000 Stunden |
|---|---|---|
| A | 2,1 | 6,1 |
| B | 2,0 | 6,2 |
| C | 1,9 | 5,9 |
| D | 1,8 | 5,8 |
| E | 1,9 | 5,9 |

**Patentansprüche**

1. Verwendung von Mischungen enthaltend eine oder mehrere verschiedene Verbindungen der Formel (I)

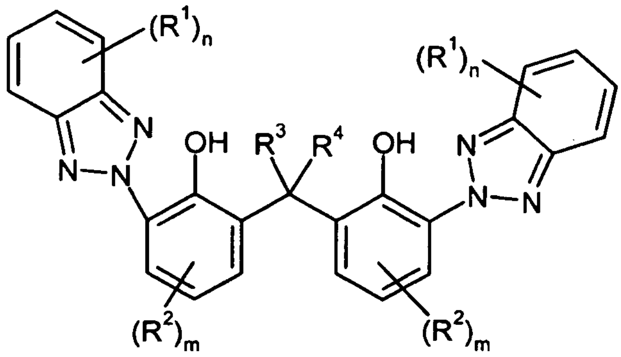

(I)

worin

$R^1$ und $R^2$ gleich oder verschieden sind und H, Halogen, $C_1$- bis $C_{10}$-Alkyl, $C_5$- bis $C_{10}$-Cycloalkyl, $C_7$- bis $C_{13}$-Aralkyl, $C_6$- bis $C_{14}$-Aryl, $-OR^5$ oder $-(CO)-O-R^5$ bedeuten, mit

$R^5$ gleich H oder $C_1$- bis $C_4$-Alkyl,

$R^3$ und $R^4$ gleich oder verschieden sind und H, $C_1$- bis $C_4$-Alkyl, $C_5$- bis $C_6$-Cycloalkyl, Benzyl oder $C_6$- bis $C_{14}$-Aryl bedeuten,
m 1, 2 oder 3 ist und
n 1, 2, 3 oder 4 ist,

und
eine oder mehrere verschiedene Verbindungen der Formel (II)

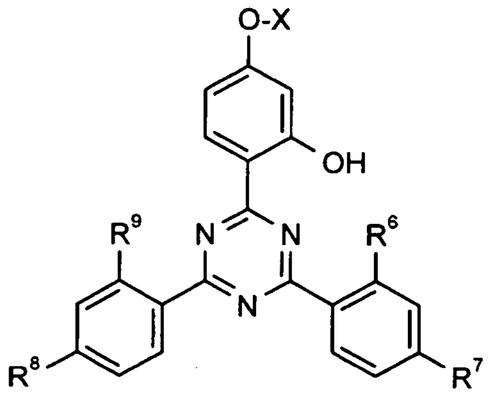

(II)

worin

$R^6$ bis $R^9$ gleich oder verschieden sind und H oder Alkyl oder CN oder Halogen sind und
X gleich Alkyl ist,

wobei der Anteil der Verbindungen nach Formel (I) und der Anteil der Verbindungen nach Formel (II) in der Mischung folgende Bedingung erfüllt:

$$\frac{\text{Anteil der Verbindungen nach Formel (I) in Gew.-\%}}{\text{Anteil der Verbindungen nach Formel (II) in Gew.-\%}} = \frac{0{,}2}{1} \text{ bis } \frac{4}{1},$$

in Zusammensetzungen enthaltend Polycarbonat zur Verbesserung der Extrusionseigenschaften dahingehend, dass bei der Extrusion der Zusammensetzungen zu Platten ein gute Qualität der Oberfläche der extrudierten Platten erhalten wird, ausgenommen Mischungen enthaltend 2,2'-methylene-bis-(6-{2H-benzotriazol-2-yl}-4-{1,1,3,3-tetramethylbutyl}-phenol in 0,15 Gew.-% und 2-(4,6-diphenyl-1,3,5-triazin-2-yl)-5-hexyloxyphenol in 0,15 Gew.-% oder Mischungen enthaltend 2,2'-methylene-bis-(6-{2H-benzotriazol-2-yl}-4-{1,1,3,3-tetramethylbutyl}-phenol in 2,48 Gew.-% und 2-(4,6-diphenyl-1,3,5-triazin-2-yl)-5-hexyloxyphenol in 2,48 Gew.-%.

**2.** Verwendung von Mischungen enthaltend eine oder mehrere verschiedene Verbindungen der Formel (III)

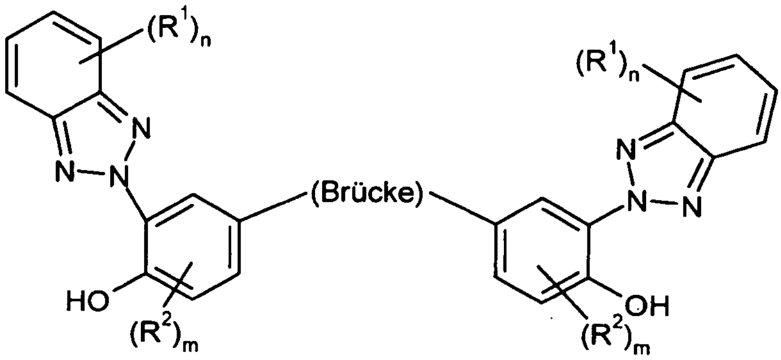

(III)

worin

$R^1$ und $R^2$ gleich oder verschieden sind und H, Halogen, $C_1$- bis $C_{10}$-Alkyl, $C_5$- bis $C_{10}$-Cycloalkyl, $C_7$- bis $C_{13}$-Aralkyl, $C_6$- bis $C_{14}$-Aryl, $-OR^5$ oder $-(CO)-O-R^5$ bedeuten, mit

$R^5$ gleich H oder $C_1$- bis $C_4$-Alkyl,

m 1, 2 oder 3 ist und
n 1, 2, 3 oder 4 ist,

Brücke gleich

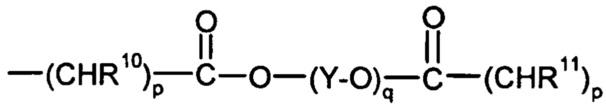

bedeutet, wobei

p gleich 0, 1, 2 oder 3 ist,
q eine ganze Zahl von 1 bis 10 ist,
Y $-CH_2-CH_2-$, $-(CH_2)_3-$, $-(CH_2)_4-$, $-(CH_2)_5-$, $-(CH_2)_6-$, oder $CH(CH_3)-CH_2$-ist und
$R^{10}$ und $R^{11}$ gleich oder verschieden sind und H, $C_1$- bis $C_4$-Alkyl, $C_5$- bis $C_6$-Cycloalkyl, Benzyl oder $C_6$- bis $C_{14}$-Aryl bedeuten,

und
eine oder mehrere verschiedene Verbindungen der allgemeinen Formel (II) nach Anspruch 1,
wobei der Anteil der Verbindungen nach Formel (III) und der Anteil der Verbindungen nach Formel (II) in der Mischung folgende Bedingung erfüllt:

$$\frac{\text{Anteil der Verbindungen nach Formel (III) in Gew.-\%}}{\text{Anteil der Verbindungen nach Formel (II) in Gew.-\%}} = \frac{0{,}2}{1} \text{ bis } \frac{4}{1},$$

in Zusammensetzungen enthaltend Polycarbonat zur Verbesserung der Extrusionseigenschaften dahingehend, dass bei der Extrusion der Zusammensetzungen zu Platten ein gute Qualität der Oberfläche der extrudierten Platten erhalten wird.

3. Verwendung nach Anspruch 1, wobei die Summe aller Verbindungen nach Formel (I) und Formel (II) in der Zusammensetzung einen Anteil von 0,05 bis 15 Gew.-%hat.

4. Verwendung nach Anspruch 2, wobei die Summe aller Verbindungen nach Formel (III) und Formel (II) einen Anteil an der Zusammensetzung von 0,05 bis 15 Gew.-% hat.

5. Verwendung nach einem der Ansprüche 1 bis 4, wobei die Summe aus Polycarbonat und Verbindungen nach Formel (I) und Verbindungen nach Formel (II) und Verbindungen nach Formel (III) in der Zusammensetzung 60 bis 100 Gew.-% beträgt.

6. Verwendung nach einem der Ansprüche 1 bis 5, wobei das Polycarbonat ausgewählt aus der Gruppe bestehend aus Bisphenol A Homopolycarbonat und Copolycarbonate auf Basis der beiden Monomere Bisphenol A und 1,1-Bis-(4-hydroxyphenyl)-3,3,5-trimethylcyclohexan ist.

7. Verwendung nach einem der Ansprüche 1 bis 6, wobei die Zusammensetzung zusätzlich 0,01 bis 0,5 Gew.-% Ester oder Teilester von ein- bis sechswertigen Alkoholen enthält.

8. Verwendung nach einem der Ansprüche 1 bis 7, wobei die Zusammensetzung zusätzlich 10 bis 3000 ppm Thermostabilisatoren enthält.

9. Verfahren zur Herstellung der Zusammensetzung nach einem der Ansprüche 1 bis 7 durch Mischen des thermoplastischen Kunststoffes mit den übrigen Bestandteilen der Zusammensetzung.

10. Mehrschichtige Platte, wobei mindestens eine Schicht eine Zusammensetzung nach einem der Ansprüche 1 bis 9 enthält.

11. Mehrschichtige Platte, wobei eine der äußersten Schichten der Platte oder beide äußerste Schichten der Platte eine Zusammensetzung nach einem der Ansprüche 1 bis 9 enthalten.

12. Mehrschichtige Platte nach Anspruch 11, wobei die Platte mindestens zwei Schichten hat und wobei mindestens eine der inneren Schichten eine Zusammensetzung nach einem der vorgenannten Ansprüche und zudem weiteres Polycarbonat enthält.

## Claims

1. Use of mixtures containing one or more different compounds of Formula (I)

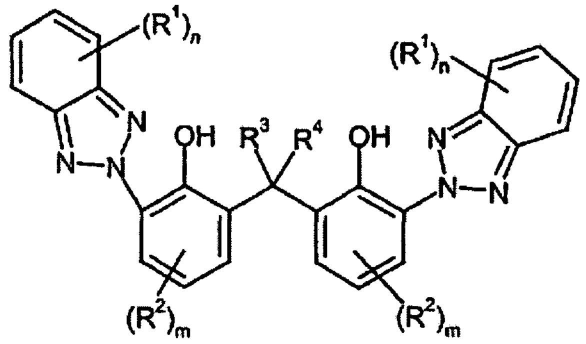

(I)

wherein
$R^1$ and $R^2$ are the same or different and represent H, halogen, $C_1$- to $C_{10}$-alkyl, $C_5$- to $C_{10}$-cycloalkyl, $C_7$- to $C_{13}$-aralkyl, $C_6$- to $C_{14}$-aryl, $-OR^5$ or $-(CO)-O-R^5$, where
$R^5$ is H or $C_1$- to $C_4$-alkyl,
$R^3$ and $R^4$ are the same or different and represent H, $C_1$- to $C_4$-alkyl, $C_5$- to $C_6$-cycloalkyl, benzyl or $C_6$- to $C_{14}$-aryl,
m is 1, 2 or 3 and
nis 1, 2, 3 or 4,
and
one or more different compounds of Formula (II)

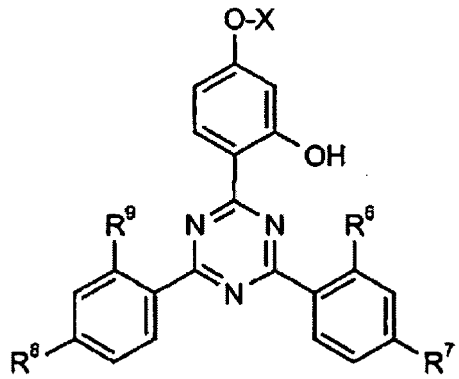

(II)

wherein
$R^6$ to $R^9$ are the same or different and are H or alkyl or CN or halogen and
X is alkyl,
wherein the content of the compounds according to Formula (I) and the content of the compounds according to Formula (II) in the mixture fulfils the following condition:

$$\frac{\text{Content of the compounds according to Formula (I) in wt.\%}}{\text{Content of the compounds according to Formula (II) in wt.\%}} = \frac{0.2}{1} \text{ to } \frac{4}{1},$$

in compositions containing polycarbonate for improving the extrusion properties to the extent that when extruding the compositions to form sheets, a good quality in the surface of the extruded sheets is obtained, excluding mixtures containing 0.15 wt.% of 2,2'-methylene-bis-(6-{2H-benzotriazol-2-yl}-4-{1,1,3,3-tetramethylbutyl}-phenol and 0.15 wt. % of 2-(4,6-diphenyl-1,3,5-triazin-2-yl)-5-hexyloxyphenol or compounds containing 2.48 wt.% of 2,2'-methylene-bis-(6-{2H-benzotriazol-2-yl}-4-{1,1,3,3-tetramethylbutyl}-phenol and 2.48 wt.%.2-(4,6-diphenyl-1,3,5-triazin-2-yl)-5-hexyloxyphenol.

**2.** Use of mixtures containing one or more different compounds of Formula (III)

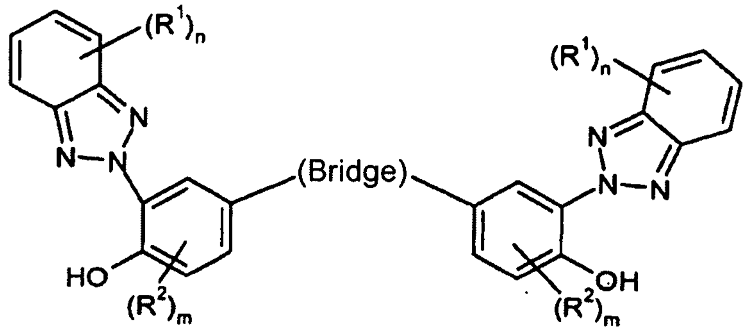

(III)

wherein
$R^1$ and $R^2$ are the same or different and represent H, halogen, $C_1$- to $C_{10}$-alkyl, $C_5$- to $C_{10}$-cycloalkyl, $C_7$- to $C_{13}$-aralkyl, $C_6$- to $C_{14}$-aryl, $-OR^5$ or $-(CO)-O-R^5$, where
$R^5$ is H or $C_1$- to $C_4$-alkyl,
m is 1, 2 or 3 and
n is 1, 2, 3 or 4,
the bridge represents

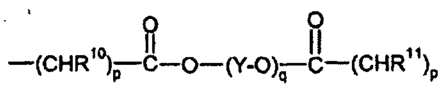

wherein
p is 0, 1, 2 or 3,
q is an integer from 1 to 10,
Y is $-CH_2-CH_2-$, $-(CH_2)_3-$, $-(CH_2)_4-$, $-(CH_2)_5-$, $-(CH_2)_6-$, or $CH(CH_3)-CH_2-$ and
$R^{10}$ and $R^{11}$ are the same or different and represent H, $C_1$- to $C_4$-alkyl, $C_5$- to $C_6$-cycloalkyl, benzyl or $C_6$- to $C_{14}$-aryl and
one or more different compounds of general Formula (II), according to claim 1,
wherein the content of the compounds according to Formula (III) and the content of the compounds according to Formula (II) in the mixture fulfils the following condition:

$$\frac{\text{Content of the compounds according to Formula (III) in wt. \%}}{\text{Content of the compounds according to Formula (II) in wt. \%}} = \frac{0.2}{1} \text{ to } \frac{4}{1},$$

in compositions containing polycarbonate for improving the extrusion properties to the extent that when extruding the compositions to form sheets, a good quality in the surface of the extruded sheets is obtained.

**3.** Use according to claim 1, wherein the sum of all compounds according to Formula (I) and Formula (II) in the composition is 0.05 to 15 wt. %.

**4.** Use according to claim 2, wherein the sum of all compounds according to Formula (III) and Formula (II) in the composition is 0.05 to 15 wt. %.

**5.** Use according to any one of claims 1 to 4, wherein the sum of polycarbonate and compounds according to Formula (I) and compounds according to Formula (II) and compounds according to Formula (III) is 60 to 100 wt. % in the composition.

**6.** Use according to any one of claims 1 to 5, wherein the polycarbonate is selected from the group consisting of

bisphenol A homopolycarbonate and copolycarbonates based on the two monomers bisphenol A and 1,1-bis-(4-hydroxyphenyl)-3,3,5-trimethylcyclohexane.

**7.** Use according to any one of claims 1 to 6, wherein the composition additionally contains 0.01 to 0.5 wt. % ester or partial ester of monohydric to hexahydric.

**8.** Use according to any one of claims 1 to 7, wherein the composition additionally contains 10 to 3,000 ppm of thermostabilisers.

**9.** Method for producing the composition according to any one of claims 1 to 7 by mixing the thermoplastic polymer with the other components.

**10.** Multilayer sheet, wherein at least one layer contains a composition according to any one of claims 1 to 9.

**11.** Multilayer sheet, wherein one of the outermost layers of the sheet or both outermost layers of the sheet contain a composition according to any one of claims 1 to 9.

**12.** Multilayer sheet according to claim 11, wherein the sheet has at least two layers and wherein at least one of the inner layers contains a composition according to any one of the preceding claims and in addition a further polycarbonate.

**Revendications**

**1.** Utilisation de mélanges contenant un ou plusieurs composés différents de la formule (I) :

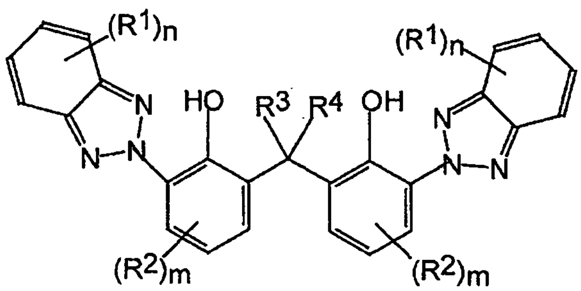

(I)

dans laquelle :

$R^1$ et $R^2$ sont identiques ou différents et représentent H, halogène, un radical alcoyle en $C_1$ à $C_6$, cycloalcoyle en $C_5$ à $C_{10}$, aralcoyle en $C_7$ à $C_{13}$, aryle en $C_6$ à $C_{14}$, $-OR^5$ ou $-(CO)-OR^5$, avec
$R^5$ qui est H ou un radical alcoyle en $C_1$ à $C_4$,
$R^3$ et $R^4$ sont identiques ou différents et représentent H, un radical alcoyle en $C_1$ à $C_4$, cycloalcoyle en $C_5$ à $C_6$, benzyle ou aryle en $C_6$ à $C_{14}$.
m est 1, 2 ou 3, et
n est 1, 2, 3 ou 4, et
un ou plusieurs composés différents de la formule (II) :

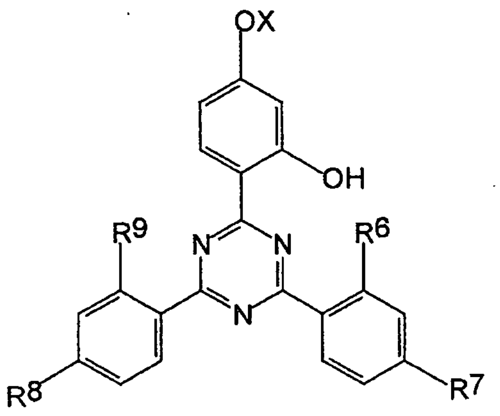

(II)

dans laquelle :

$R^6$ à $R^9$ sont identiques ou différents et représentent H ou un radical alcoyle ou CN ou halogène, et
X est un radical alcoyle,

où la proportion des composés de la formule (I) et la proportion des composés de la formule (II) dans le mélange remplissent la condition suivante :

$$\frac{\text{proportion des composés de la formule (I) en \% en poids}}{\text{proportion des composés de la formule (II) en \% en poids}} = \frac{0,2}{1} \text{ à } \frac{4}{1}$$

dans des compositions contenant un polycarbonate pour améliorer les propriétés d'extrusion, en ce que lors de l'extrusion des compositions en plaques, on obtient une bonne qualité des surfaces des plaques extrudées, excepté les mélanges contenant le 2,2'-méthylène-bis(6-{2H-benzotriazol-2-yl}-4-{1,1,3,3-tétraméthylbutyl}phénol à 0,15% en poids et le 2-(4,6-diphényl-1,3,5-triazin-2-yl)-5-hexyloxyphénol à 0,15% en poids, ou les mélanges contenant le 2,2'-méthylène-bis(6-{2H-benzotriazol-2-yl}-4-{1,1,3,3-tétraméthylbutyl}phénol à 2,48% en poids et le 2-(4,6-diphényl-1,3,5-triazin-2-yl)-5-hexyloxyphénol à 2,48% en poids.

**2.** Utilisation de mélanges contenant un ou plusieurs composés différents de la formule (III) :

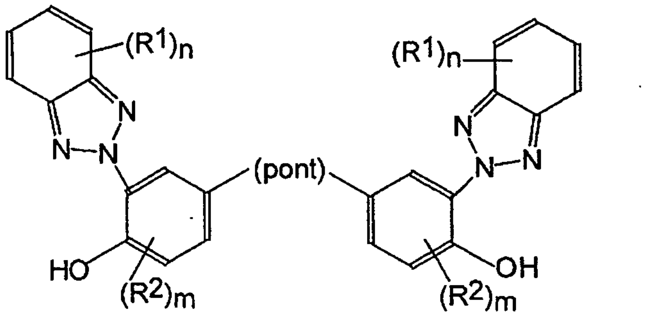

(III)

dans laquelle :

$R^1$ et $R^2$ sont identiques ou différents et représentent H, halogène, un radical alcoyle en $C_1$ à $C_{10}$, cycloalcoyle en $C_5$ à $C_{10}$, aralcoyle en $C_7$ à $C_{13}$, aryle en $C_6$ à $C_{14}$, $-OR^5$ ou $-(CO)-OR^5$, avec
$R^5$ qui est H ou un radical alcoyle en $C_1$ à $C_4$,

m est 1, 2 ou 3, et
n est 1, 2, 3 ou 4, et
pont signifie $-(CHR^{10})_p-C(=O)-O-(Y-O)_q-C(=O)-(CHR^{11})_p$,
où
p est égal à 0, 1, 2 ou 3,
q est un nombre entier allant de 1 à 10,
Y est $-CH_2-CH_2-$, $-(CH_2)_3-$, $-(CH_2)_4-$, $-(CH_2)_5-$, $-(CH_2)_6-$, ou $CH(CH_3)-CH_2-$, et
$R^{10}$ et $R^{11}$ sont identiques ou différents et représentent H, un radical alcoyle en $C_1$ à $C_4$, cycloalcoyle en $C_5$ à $C_6$, benzyle ou aryle en $C_6$ à $C_{14}$,
et
un ou plusieurs composés différents de la formule générale (II) selon la revendication 1,

où la proportion des composés de la formule (III) et la proportion des composés de la formule (II) dans le mélange remplissent la condition suivante :

$$\frac{\text{proportion des composés de la formule (III) en \% en poids}}{\text{proportion des composés de la formule (II) en \% en poids}} = \frac{0,2}{1} \text{ à } \frac{4}{1}$$

dans des compositions contenant un polycarbonate pour améliorer les propriétés d'extrusion, en ce que lors de l'extrusion des compositions en plaques, on obtient une bonne qualité des surfaces des plaques extrudées.

**3.** Utilisation selon la revendication 1, où la somme de tous les composés des formules (I) et (II) dans la composition a une proportion allant de 0,05 à 15% en poids.

**4.** Utilisation selon la revendication 2, où la somme de tous les composés des formules (III) et (II) dans la composition a une proportion allant de 0,05 à 15% en poids.

**5.** Utilisation selon l'une des revendications 1 à 4, où la somme du polycarbonate et des composés de formule (I) et des composés de la formule (II) et des composés de la formule (III) se situe dans la composition, dans l'intervalle allant de 60 à 100% en poids.

**6.** Utilisation selon l'une des revendications 1 à 5, où le polycarbonate est choisi parmi le groupe consistant en un homopolycarbonate de bisphénol A et des copolycarbonates à base des deux monomères bisphénol A et 1,1,-bis (4-hydroxyphényl)-3,3,5-triméthylcyclohexane.

**7.** Utilisation selon l'une des revendications 1 à 6, où la composition contient en outre, 0,01 à 0,5% en poids d'ester ou d'ester partiel d'alcools mono- à hexavalents.

**8.** Utilisation selon l'une des revendications 1 à 7, où la composition contient en outre, 10 à 3000 ppm de thermostabilisants.

**9.** Procédé de préparation d'une composition selon une des revendications 1 à 7, par mélange de la matière plastique thermoplastique avec les autres constituants de la composition.

**10.** Plaque multicouche, où au moins une couche contient une composition selon une des revendications 1 à 9.

**11.** Plaque multicouche, où une des couches extérieures de la plaque ou les deux couches extérieures de la plaque contiennent une composition selon une des revendications 1 à 9.

**12.** Plaque multicouche selon la revendication 11, où la plaque a au moins deux couches et où au moins une des couches internes contient une composition selon l'une des revendications précédentes et de plus, un autre polycarbonate.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0110221 A
- EP 0320632 A
- EP 0247480 A
- EP 0500496 A
- EP 0825226 A
- EP 1290079 B
- DE 4238123 A
- EP 110221 A
- EP 110238 A
- EP 0110238 A


### In der Beschreibung aufgeführte Nicht-Patentliteratur


- Schnell'', Chemistry and Physics of Polycarbonates. Polymer Reviews. Interscience Publishers, 1964, vol. 9
- Synthesis of Poly(ester)carbonate Copolymers. **D.C. PREVORSEK ; B.T. DEBONA ; Y. KESTEN.** Journal of Polymer Science, Polymer Chemistry. Corporate Research Center, Allied Chemical Corporation, 1980, vol. 19, 75-90
- Polycarbonates. **D. FREITAG ; U. GRIGO ; P.R. MÜLLER ; N. NOUVERTNE ; BAYER AG.** Encyclopedia of Polymer Science and Engineering. 1988, vol. 11, 648-718
- Polycarbonate. **U. GRIGO ; K. KIRCHER ; P.R. MÜLLER.** Polycarbonate, Polyacetale, Polyester, Celluloseester. Carl Hanser Verlag, 1992, vol. 3/1, 117-299